# EUROPEAN PATENT APPLICATION

(11) **EP 2 579 379 A1**
(43) Date of publication of application: **10.04.2013**
(21) Application number: 11786334.0
(22) Date of filing: 25.05.2011
(51) Int. Cl.: H01M 10/39

(54) **SOLID-ELECTROLYTE SECONDARY BATTERY**

(30) Priority: 24.09.2010 JP 2010213743; 30.06.2010 JP 2010149310; 25.05.2010 JP 2010119415
(71) Applicant: Kabushikikaisha Jinkoshigen Kenkyusho, Nakamura-ku Nagoya-shi Aichi 450-0002 (JP)
(72) Inventor: OHKAWA, Hiroshi, Nagoya-shi Aichi 450-0002 (JP)
(74) Representative: Winter, Brandl, Fürniss, Hübner, Röss, Kaiser, Polte - Partnerschaft
(86) International application number: PCT/JP2011/002914
(87) International publication number: WO 2011/148631

(57) **Abstract**

The present invention is to provide a solid electrolyte secondary battery having a safer structure. This secondary battery has a positive storage container and a positive storage container which are separated from each other. A part of negative electrode active material and positive electrode active material are housed in different containers. Even the battery is broken. Both of the electrode active materials have not been mixed. The battery is safe.

## Description

### TECHNICAL FIELD

The present invention relates to a secondary battery using a solid electrolyte, such as β-alumina.

### BACKGROUND OF THE ART

Secondary batteries have been used in the various pieces of equipment such as digital cameras, notebook computers and mobile phones as well as in each vehicles of automobiles, aircraft and agricultural machined. Among them, in recent years, sodium sulfur batteries have been attracting attention as a secondary battery that can store large amount of power.
The conventional general sodium sulfur battery is composed of a solid electrolyte of a bottomed cylindrical shape made of materials such as β-alumina having a sodium ion permeability, cylindrical case holding the solid electrolyte in its axial portion, molten sodium which is housed in a negative electrode chamber provided on the inside of the solid electrolyte, and molten sulfur which is housed in a positive electrode chamber provided on outside of the solid electrolyte and inside of the case.
This sodium-sulfur battery is operated in a state of being heated to a temperature of 290-350 °C. Molten sodium in the negative electrode chamber transmits through the solid electrolyte acts as a sodium ion and reacts with sulfur to generate a multi-sodium sulfide in the positive electrode chamber, then discharge is carried out.When charging, a reverse reaction proceeds, molten sodium is returned to the negative electrode chamber.

This solid electrolyte of the sodium sulfur battery is formed of β-alumina or β"-alumina composed of aluminum oxide and sodium oxide, and has a shape of a bottomed cylindrical such as a test tube-like shape.

In the case that this solid electrolyte of a bottomed cylindrical has been damaged, the molten sodium, which is highly active and is held in the electrolyte, flows to outside to react with the molten sulfur in the side of the outer peripheral surface of the bottomed cylindrical solid electrolyte, the reaction is rapid exothermic.

To the problem of damages of the solid electrolyte, in Japanese Patent Laid-Open No. H2-112168(1990), a negative electrode container having a small hole in its bottom is used in the negative electrode chamber of the solid electrolyte of a bottomed cylindrical shape.
Further, a safety tube is used between the inner circumferential surface of the solid electrolyte and the outer peripheral surface of the negative electrode container. This allows such configuration that even if the solid electrolyte bulkhead has damaged, a large part of molten sodium has been held in the safety tube to suppress the reaction with sulfur.

However, even in this configuration, there is no change that a large amount of molten sodium are still housed inside of the solid electrolyte, and the sense of security can not be obtained. In addition, because it is provided with double structure inside the solid electrolyte, battery structure becomes complicated.

Japanese Patent Laid-Open No.S50-38030(1975) discloses a plate-shaped solid electrolyte. This plate-shaped solid electrolyte has plurality of independent pores downward from the center of the thickness direction of the upper end surface of the plate. Molten sodium is housed in a sodium storage container remotely located from solid electrolyte, sodium has been provided to the pores in the plate-shaped solid electrolyte from this storage container.
Even if this plate-shaped solid electrolyte has been damaged and molten sodium has flowed out, it has been not a big problem, because the amount of molten sodium in the pores is small,

However, it is not easy to mold the solid electrolyte of a plate-like shape. The mass production may be unsuitable, and the cost per single cell battery may be higher.

In addition, the conventional sodium sulfur battery has a configuration for housing the solid electrolyte in the center of the positive electrode container made of metal for housing the molten sulfur.

Further, sodium sulfur battery is necessary to have a structure that its positive electrode chamber and its negative electrode chamber contain each of molten sodium and molten sulfur without leaking.
Because both the sulfur which is positive electrode active material and the sodium which is negative electrode active material are in molten state under the operating temperature, in other words, they are liquid. In addition, sodium sulfur battery is necessary to have a structure which is sealed in airtight and is completely blocked from the atmosphere because the sodium reacts explosively with oxygen and moisture in the atmosphere.
Therefore, in order to improve the sealing of each joint, a brazing method or a thermal diffusion bonding method which use an active metal for joining the outer cylinder container with the α-alumina have been adopted.

However, the sodium sulfur battery is a battery to operate at a high temperature from 290 to 350 degrees as described above, temperature change caused by the repetition of operation and stop is large. Thermal stress based on the differences in expansion and contraction of the outer cylinder container and α-alumina due to temperature changes may attack the sealing portion. Mechanical stress based on the external force may join. Therefore, there is a risk of cracks or damages to the sealing portion.
In addition, the solid electrolyte is formed thinly in order to enhance the conductivity of sodium ions, can not always get sufficient strength. Therefore, there is also fear that solid electrolyte may be damaged by stress due to the above temperature change, furthermore, the active material may leak to the outside of the battery.
Various improvements have been made in response to Japanese Patent Laid-Open No.H3-187160(1991) and Japanese Patent Laid-Open No. H6-196204(1994).

### PRIOR ART REFERENCES

### PATENT LITERATURE

Japanese Patent Laid-Open No. H2-112168(1990): Patent Document 1
Japanese Patent Laid-Open No. S50-38030(1975): Patent Document 2
Japanese Patent Laid-Open No. H3-187160(1991): Patent Document 3
Japanese Patent Laid-Open No. H6-196204(1994): Patent Document 4
Japanese Patent Laid-Open No. 2001-93570: Patent Document 5
Japanese Patent Laid-Open No. 2001-102087: Patent Document 6
Japanese Patent Laid-Open No. 2001-243975: Patent Document 7
Japanese Patent Laid-Open No. H7-176328(1995): Patent Document 8
Japanese Patent Laid-Open No. H11-121031(1999): Patent Document 9
Japanese Patent Laid-Open No. H10-302830(1998): Patent Document 10
Japanese Patent Laid-Open No. S63-271865(1988): Patent Document 11
Japanese Patent Laid-Open No. S63-66863(1988): Patent Document 12

### SUMMARY OF THE INVENTION

### PROBLEMS TO BE SOLVED BY THE INVENTION

The primary purpose of the present invention is to provide a solid electrolyte secondary battery having a structure can be obtained more safety.
The second purpose of the present invention is to provide a solid electrolyte secondary battery having a simpler structure.
In addition, the third purpose of the present invention is to provide a solid electrolyte secondary battery that even if there are cracks in the solid electrolyte, interval of this crack does not spread and crack is biased in the direction of closing,
Furthermore, the fourth purpose of the present invention is to provide a solid electrolyte secondary battery that even if a solid electrolyte has been damaged, active material dose not leak to the outside of the battery.

### MEANS FOR SOLVING THE PROBLEMS

Solid electrolyte secondary battery of the present invention is characterized by having a negative electrode active material, a positive electrode active material, a negative storage container for housing a large amount of the negative electrode active material, and a positive storage container for housing the positive electrode active material configured as a separate body from the negative storage container.
The positive storage container is made of a solid electrolyte which allows the negative electrode active material to pass. The solid electrolyte separates at least a part of positive electrode chamber holding the positive electrode active material and at least a part of negative electrode chamber holding other part of the negative electrode active material.
In this way, since the positive storage container for housing the positive electrode active material and the negative storage container for housing the negative electrode active material are formed as a separate body, in the solid electrolyte secondary battery of the present invention, even if the solid electrolyte has been damaged, a large amount of negative electrode active material and the positive electrode active material do not touch as a course that a part of the negative electrode active material and the positive electrode active material are held in the different and separate storage containers.
For this reason, the present invention can avoid the enormous heat generation due to the damage, and a sense of safety is obtained. Since the positive storage container and the negative storage container are formed as a separate body, the solid electrolyte secondary battery can obtain a simpler structure.

Here, the negative electrode active material is typified by sodium metal. Lithium and potassium are the candidates. As the positive electrode active material, sulfur or a mixture of sulfur and some of a salt (sodium chloride and aluminum chloride) can be mentioned. The positive electrode active material is a substance to form a compound that reacts with the negative electrode active material.
In addition, the solid electrolyte is a ceramic which is permeable to negative electrode active material. The ceramic is β-alumina or β "-alumina.
The negative storage container of the present invention is to accommodate most of the negative electrode active material. The rest of that is held in the negative electrode chamber. Since a large amount of negative electrode active material is housed in this negative storage container, a large amount of the negative electrode active material and the positive electrode active material can be away from each other. Thus safety is increased.
In addition, at the time of discharge, the negative electrode active material in the negative chamber is reduced by discharge reaction. The negative electrode active material reduced in the negative electrode chamber is supplied from the negative storage container. There is little quantity maintained by the negative electrode chamber. But the battery capacity is not little.
The negative storage container is formed of a corrosion-resistant material to the negative electrode active material, preferably formed of a material that is corrosion-resistant metal. The shape of the negative container is not limited to particular as long as it acts as the container.

At least a part of the positive storage container of the present invention is formed of the solid electrolyte. The solid electrolyte separates at least a part of the positive electrode chamber holding the positive electrode active material and at least a part of negative electrode chamber holding a part of the negative electrode active material.
The entire of the positive storage container can be formed of the solid electrolyte, and also, a part of the positive storage container which does not contribute to the cell reaction can be formed by substances other than the solid electrolyte. In other words, in the present invention, the positive electrode chamber itself formed of the solid electrolyte works as a container of the positive electrode active material.
The positive electrode storage container of the present invention may have at least one positive electrode chamber and a plurality of negative electrode chambers which are spaced from the wall of this compartment along the wall to partition of this positive electrode chamber. More specifically, both of the positive electrode chamber and the negative electrode chamber, can be shaped of a hole (cylindrical) extending along the axial direction. The outside appearance of this positive storage container can be a pillar shape.

Here, the pillar shape is a shape that extends in the direction of uniaxial. More specifically, it is possible that outer peripheral shape is circular shape, oval, triangle, square, etc. in any shape. Pillar shape referred to in the secondary battery of the present invention, has at least one positive electrode chamber extending in the axial direction. And the cross-sectional shape of the positive electrode chamber can be any shape such as round, oval, triangle, square, etc.

The positive storage container with this pillar shape is simple and is easy to manufacture because it extends in the axial direction.

The negative electrode chambers can be formed as a room space which has a cross-sectional area smaller than the cross-sectional area of the positive electrode chamber. And the negative electrode chambers are shaped along the walls of the positive electrode chamber and extend in the axial direction.
More specifically, a plurality of negative electrode chamber is formed around the positive electrode chamber. A part of the gap between the positive electrode and negative electrode chambers functions primarily as an electrolyte.
And if we connect the positive electrode active material of the positive electrode chamber and the negative electrode active material of the negative electrode chamber through an external circuit, it can act as a single cell.

The solid electrolyte secondary battery of the present invention may have a biasing member in contact with the outer surface of at least a portion of the positive storage container, and urging the center side of the positive storage container. This biasing member, for example, shall be a thin mat made of heat resistant material such as carbon fiber and glass fiber. Because this biasing member abuts against at least a portion of the outer surface of the positive storage container, the storage container is pressed resiliently toward the side of its center.
Therefore, even if the positive storage container is damaged and cracked, the pressing power of the biasing member presses the container to close the cracks. The shape of the container body can be maintained. Thus, it is possible to suppress the leaking of the positive electrode active material from the crack.
Therefore, by providing a biasing member, the occurrence of cracks in the positive storage container is reduced. Thus, the positive electrode active material is prevented from contacting with the negative electrode active material.

A band can be used as other biasing member. The band works to tighten the positive storage container.

The positive storage container of the present invention may be composed of a container body and a negative electrode member. The container body may be cylindrical and may be made of the solid electrolyte. The negative electrode member holds the container body and forms the positive electrode chamber between the outer peripheral surface of the container body and the inner surface of the negative electrode member.

The solid electrolyte of the solid electrolyte secondary battery of the present invention may make up the cylindrical container body. The positive electrode chamber is formed on the inside of this container body. In addition, the negative electrode member covers the outer surface of the container body. The gap formed by the outer peripheral surface of the container body and the inner surface of the negative electrode member becomes the negative electrode chamber.
In other words, the negative electrode chamber is formed as a gap between the negative electrode member and the container body. The capacity of the negative electrode chamber is small. And the content of the negative electrode active material is small. Therefore, even if the container body that is configured with solid electrolyte damages, the negative electrode active material leaking is reduced, and more safety can be obtained.
Moreover, the negative electrode chamber may be formed in the almost all over the region of the outer surface of the container body, it is possible to increase the area of the solid electrolyte that acts as a partition wall and increase the output of the battery.

Here, a container body is cylindrical, and a space which is partitioned by its inner surface of the body works as the positive electrode chamber and also is the accommodating space of positive electrode active material. And the cross-sectional shape of the container body can be round, oval, triangle, square, etc.
In the solid electrolyte secondary battery of the present invention, because a space which is partitioned by inner surface of the container body is used as the positive electrode chamber, the positive electrode chamber extends in the axial direction, and the cross-sectional shape of that can be any shape such as round, oval, triangle, square, etc.

The container body extends in the axial direction, the shape of the body becomes simple and easy to manufacture.

The negative electrode chamber is a space formed by the partition between the outer surface of the container body and the inner surface of the negative electrode member disposed on the outer surface of the container body Therefore, the negative electrode chamber extends in the axial direction and is formed so as to surround the periphery of the positive electrode chamber separated by the container body consisting of solid electrolyte.
In addition, the cross-sectional shape of the negative electrode chamber can be any shape such as a circular ring, oval, triangle, square-shaped depending on the shape of the container body and the shape of the negative electrode member disposed in the surroundings of the container body.
Further, a space formed by the partition between the outer surface of the container body and the inner surface of the negative electrode member had better be formed as narrow as possible, so it is possible to reduce the amount of the negative electrode active material housed in the space, Thus, safety increases.

The negative electrode member is preferable to have ridges extending in the axial direction on its inner side at predetermined intervals. The ridges press the outer peripheral surface of the container body

The negative electrode member, for example, can be formed of metal such as stainless steel or aluminum. The ridges may have at least projections from the inner side of the negative electrode member and extending along the outer surface of the container body. Thus, for example, the negative electrode member may be provided with ridges at predetermined intervals in the inner surface of the flat plate-like thing.
It may also be arranged to form a continuous ridge on both sides of the inner surface and the outer surface of the negative electrode member bent in a wavelike fashion at predetermined intervals.

A method of arranging the negative electrode member, which is a metal plate for example, is to surround the outer peripheral surface of the container body with the metal plate. At this time, the length of the longitudinal direction of the negative electrode plate-like member is formed shorter than the length of the circumference of the container body.
Both ends of the negative electrode plate-like member wrapped along the direction of the outer peripheral surface are closed to junction in the state pulled. For this reason, tips of a plurality of ridges formed on the inner surface of the negative electrode member are in contact with the outer peripheral surface of the container body, and the ridges press the side of the outer peripheral surface of the container body toward its center of the axis. In addition, because the positive electrode chamber is sealed under reduced pressure, the container body is pressed in the axial direction from the outside of the container body, further in the axial direction from the side of both ends of the container body by the pressure difference with the atmosphere.
As a result, the container body is pressed in the direction such that the shape of the container body is smaller in other words, in the circumferential direction of the axial length is shortened,
For this reason, even if the container body damaged and cracked, the power of pressurized is held down the crack parts in the direction of closing the cracks. Thus, it is possible to suppress the leaking of the negative electrode active material from the crack, because the shape of the container body before the crack occurs can be maintained.
The container body has a shape extending in the direction of uniaxial and housing space of the positive electrode active material. The outer peripheral shape of the container body can be any shape such as round, oval, triangle, square, etc. In the solid electrolyte secondary battery of the present invention, because a space formed by inner surface of the container body is used as the positive electrode chamber, the positive electrode chamber extends in the axial direction, and the cross-sectional shape of that can be any shape such as round, oval, triangle, square, etc.

The negative electrode member had better have ridges. Those ends of the ridges press the outer peripheral surface of the container body extending in the axial direction on the inner side at predetermined intervals. In addition, the negative electrode member, it shall have the wavy section extending along the outer peripheral surface of the container body is preferred.
Further, the negative electrode chamber can be provided with porous spacers, to hold the negative electrode active material in the holes of the porous spacer.

This solid electrolyte secondary battery can be having a biasing member for biasing the center side of the container body of the positive electrode active material storage container, And this biasing member can be provided in the negative electrode chamber which is between the inner side of the negative electrode member and the outer side of the container body.

This biasing member can be, for example, a thin mat more compressed carbon fiber having heat resistance, such as glass fiber. Since this biasing member is arranged between the inner side of the negative electrode member and the outer side of the container body and abuts against at least a portion of the outer surface of the container body. The storage container is pressurized resiliently toward the side of its center.
In addition, because the positive electrode chamber is sealed under reduced pressure, the container body is pressed in the axial direction from the outside of the container body. Further the container body is pressed in the axial direction from the side of both ends of by the pressure difference with the atmosphere.
As a result, the container body is pressed in the direction such that the shape of the container body is smaller, in other words, in the circumferential direction of the axial length is shortened, namely in the direction of the circumference of the container body is smaller.
For this reason, even if the container body is damaged and cracked, the power of pressurized is held down in the direction of closing the cracks. Therefore, it is possible to suppress the leaking of the negative electrode active material from the crack, because the shape of the container body before the crack occurs can be maintained. Therefore, by providing a biasing member, the occurrence of cracking of the container body is reduced. It is possible to prevent the mixing of the positive electrode active material and negative electrode active material.

The positive storage container housing for the positive electrode active material of the present invention may be made to have a lid and a bottom lid of ceramic that are fixed to each of the upper and lower ends of the container body of a cylindrical formed in the solid electrolyte.
In addition, a flexible sheet may be used to cover the outer peripheral surface of the positive storage container hermetically.

This solid electrolyte secondary battery is provided in the manner that the negative storage container and the positive storage container are separate and independent. The conventional solid electrolyte secondary battery has been provided in an integrated manner in a single cell having the positive storage container and the negative storage container. The structure for sealing of the conventional battery had become complicated.
In the present secondary battery, since it is provided independent manner, it can be kept low labor costs and can simplify the enclosed structure.

And the solid electrolyte container body having the positive electrode chamber in its inner side and the negative electrode chamber in its outer side is hermetically sealed by fixing the lid and the bottom lid of a ceramic. As a way of fixing of this case, for example, those can be considered as a method such as glass bonding, brazing, and diffusion bonding due to heat.
In addition, because the solid electrolyte is composed of β-alumina and the lid and the bottom lid are composed of ceramic, they are both ceramic. The binding of ceramic and ceramic is easy compared with the case of binding the metal and ceramic, In addition, as the ceramic to form a lid and a bottom lid, for example, α-alumina, β-alumina, β "alumina, silicon nitride or silicon carbide can be used.

Moreover, the positive storage container may be a structure to cover the outer peripheral surface of the container with a soft sheet. The structure has high airtightness. As a result, even if leakage occurs at the binding part between the positive storage container and the lid or the bottom lid due to temperature changes caused by repeated operation and stop of the battery, there is no possibility of leaking the active material to the outside, for the flexible sheet seals the positive storage container from outside. Thus, solid electrolyte secondary battery with high safety can be obtained.

The negative electrode chamber can be formed of a plurality of holes which extend in the axial direction and arranged in the circumferential in the container body, The negative electrode chamber is made of a solid electrolyte and spaced from the positive electrode chamber. Those hole-like spaces are formed so as to surround the positive electrode chamber along the inner wall surface of the cylindrical container body defining the positive electrode chamber.

Moreover, the outer surface of the cylindrical container body is covered by the negative electrode member, and a gap formed by the outer surface of the container body and the inner surface of the negative electrode member can also be used as the negative electrode chamber. Negative electrode member can be made of, for example, metal plates such as stainless steel, aluminum or the like.

As the above flexible sheet, it is preferable to use those consisting of metal foil. Metal foil is easily used to cover and seal the positive storage container without constraints such as size and shape of the positive storage container. And it is less expensive material cost.
In addition, the material of the metal foil is required to have properties of, ease of welding, high rust resistance, high heat resistance, and high mechanical strength. As a material that can be used, for example, aluminum, copper, nickel, iron, titanium, stainless steel or the like.
For concrete thickness of the metal foil is not particularly limited. Appropriately use a thin film of a performance degree that can be required depending on the material of metal foil, as described above.

Further, in this solid electrolyte secondary battery, an anode rod fixed to the lid or bottom lid to one end and extending in the axial direction in the positive electrode chamber can be provided to the positive storage container. Among the anode rod, those of having a plate-shaped spacing pieces extending radially out in the radial direction to form a plurality of compartments from positive electrode chamber are used. Thus, it is possible to increase the reaction area of the battery in the positive electrode chamber, and to increase the efficiency of charge-discharge reaction.

Furthermore, this solid electrolyte secondary battery can be provided with a porous spacer. This porous spacer exerts pressure acting on the outer surface of the negative electrode member on the outer peripheral surface of the container body made of a solid electrolyte. For this reason, the pressure acting on the outer surface of the negative electrode member is exerted the porous spacer maintained in the negative electrode chamber on the outer peripheral surface of the container body, and acts as the power to compress the container body.
For this reason, even if the container body damaged and cracked, the power of pressurized is held down the crack parts in the direction of closing the cracks. Thus, it is possible to suppress the leaking of the active material from the crack, because the shape of the container body before the crack occurs can be maintained.

In addition, by adjusting the pressure in the positive electrode chamber and negative electrode chamber, it is possible to be adjusted appropriately the pressure acting on the outside of the negative electrode member. This pressure is, in other words, compression force acting on the outer peripheral surface of the container body.

As a porous material that makes up the porous spacer, for example, metal fiber, foam metal or porous ceramic, etc can be used. In addition, the porous spacer is maintained in the negative electrode chamber, and the negative electrode active materials such as molten sodium are impregnated in the porous spacer.

### BRIEF DESCRIPTION OF THE DRAWINGS

[Figure 1] is a longitudinal sectional view of a sodium-sulfur battery of Example 1
[Figure 2] is a cross-sectional view of a sodium-sulfur battery of Example 1.
[Figure 3] is a perspective view of the container body of pillar shape of the solid
electrolyte which is used for sodium-sulfur battery of Example 1.
[Figure 4] is a cross-sectional view of a sodium-sulfur battery of Example 2.
[Figure 5] is a cross-sectional view of a sodium-sulfur battery of Example 3.
[Figure 6] is a cross-sectional view of a sodium-sulfur battery of Example 4.
[Figure 7] is a cross-sectional view of a sodium-sulfur battery of Example 5.
[Figure 8] is a cross-sectional view of a sodium-sulfur battery of Example 6.
[Figure 9] is a cross-sectional view of a sodium-sulfur battery of Example 7.
[Figure 10] is a longitudinal sectional view of a sodium-sulfur battery of Example 8.
[Figure 11] is a cross-sectional view of a sodium-sulfur battery of Example 8.
[Figure 12] is an enlarged view of a partial cross-sectional view of a sodium-sulfur battery of Example 8.
[Figure 13] is a cross-sectional view of an essential part of modified example of Example 8.
[Figure 14] is an enlarged view partially in Figure 13.
[Figure 15] is a cross-sectional view of another modified example of Example 8.
[Figure 16] is an enlarged view partially in Figure 13.
[Figure 17] is a longitudinal sectional view of another modified example of Example 8.
[Figure 18] is a longitudinal sectional view of a sodium-sulfur battery of Example 9.
[Figure 19] is a cross-sectional view of a sodium-sulfur battery of Example 9.
[Figure 20] is a longitudinal sectional view of a sodium-sulfur battery of Example 1 U.

### BEST MODE FOR CARRYING OUT THE INVENTION

The present invention will be described more specifically with examples of solid electrolyte secondary battery of the present invention,.

### EXAMPLE 1

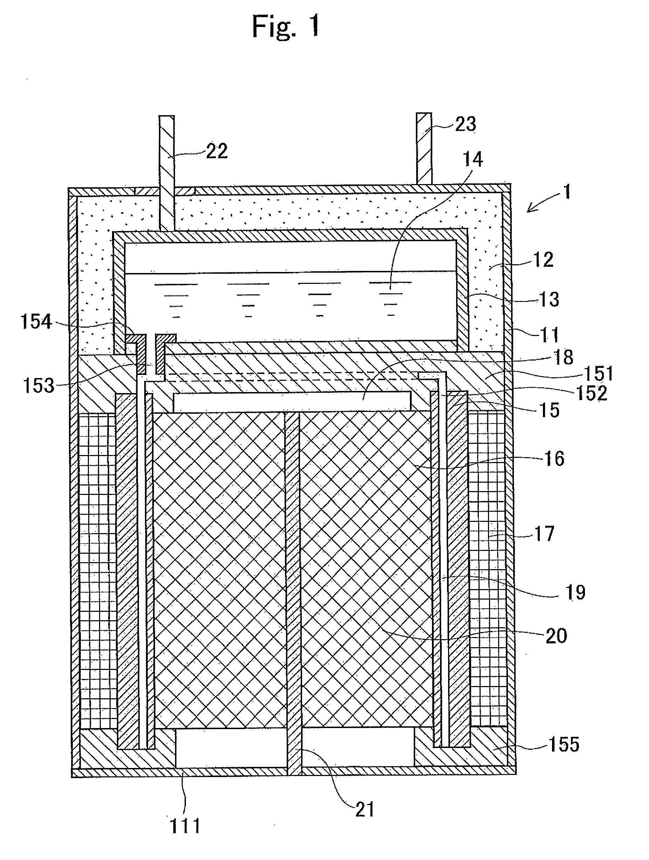

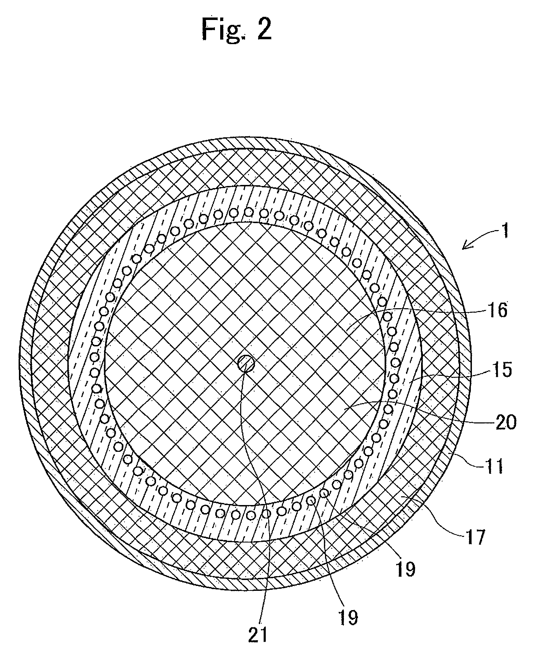

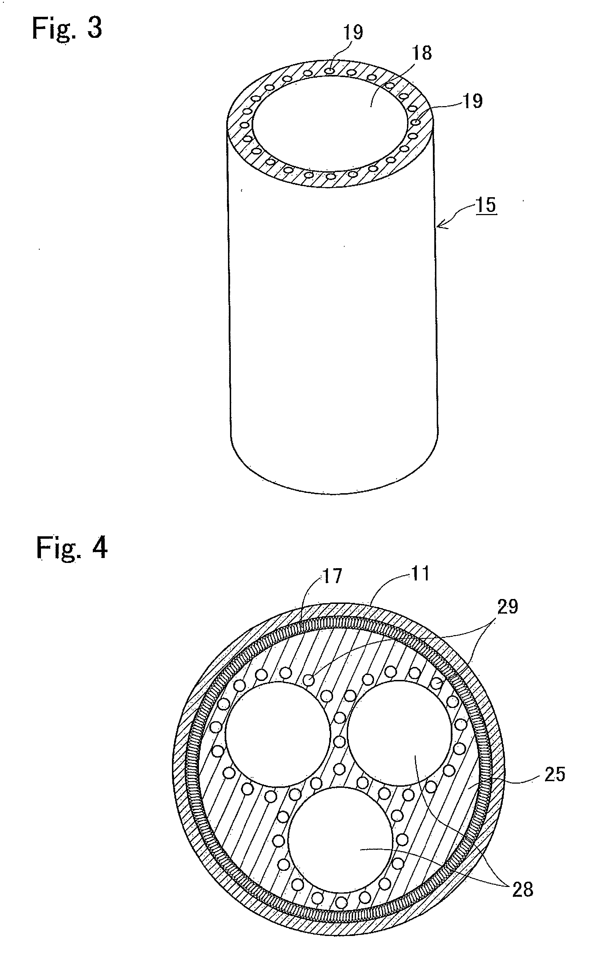

Figure 1 shows a longitudinal sectional view of a sodium-sulfur battery 1 of a first embodiment of the present invention, Figure 2 shows a cross-sectional view of an essential part of that, and the Figure 3 shows a perspective view of the container body consisting of β alumina as a solid electrolyte to function.
This sodium-sulfur battery 1 is composed primarily by a cylindrical protection can 11 made of metal, a sodium container 13 maintained through an insulator 12 which is formed of glass fiber mat at the upper part of inside space of this protection can 11, molten sodium 14 maintained in the sodium container 13, a container body 15 of cylindrical produced by the β alumina and maintained at the lower part of inside space of this protection can 11, molten sulfur 16 maintained in this inside space, and a biasing member 17 consisting of carbon fiber mat which is placed in a compressed state between the outer peripheral surface of the container body 15 and the inner peripheral surface of the protection can 11. The container body 15 as shown in Figure 3 has a cylindrical shape with a thick wall. The internal space corresponds to the axial hole of the cylindrical shape forms a positive electrode chamber 18. The negative chambers 19 have shapes of narrow aperture which extend in the axial direction at short intervals along the inner circumferential surface of the container body 15 is formed a lot apart from in the circumferential direction.
The container body 15 is produced by a known method to obtain a rod-shaped molding in ceramic extrusion, cut into a predetermined length, heated, the degreasing step is performed except the binder which is resin or the like, and then, sintered. In addition, the container body 15 can be also machined a block-shaped compaction body which was compacted solid electrolyte powder into a predetermined shape, and then be produced by sintering.
An α-alumina lid 151 is fixed integrally bonded with glass adhesive material or the like on the top surface of the container body 15. The lid 151 has a ring-shaped groove on its lower surface, and the opening surface of the groove becomes a ring-shaped passage 152 by closing at the upper end surface of the container body 15.
This ring-shaped passage 152, which communicates with the upper end openings of the negative electrode chambers 19 of the container body 15. The container body 15 has a vertical passage 153 extending from the upper surface of the lid 151 to the ring-shaped passage 152.
Lower end surface of the container body 15 and a sealing ring 155 formed in the α-alumina are fixed integrally bonded to the glass adhesive material or the like. This sealing ring 155 serves to seal the lower end openings of the negative electrode chambers 19 which are provided at equal intervals in the circumferential direction of the container body 15. Sodium storage container 13 is placed on top of the lid 151.
A through hole is formed at the bottom of the sodium storage container 13, and a connecting pipe 154 made of metal with a shaft hole is bonded by pressing to a vertical passage 153 which are common hole of the through hole.
Molten sodium 14 is maintained in the sodium storage container 13, passes through the axial hole of the connecting pipe 154, the vertical passage 153, and the ring-shaped passage 152, flows into all of negative electrode chambers 19, then, the negative electrode chambers 19 are filled with it.
In addition, in between the outer peripheral surface of the container body 15 and the inner peripheral surface of the protection can 11, as shown in Figure 1, a biasing member 17 consisting of carbon fiber compressed in the thickness direction is held in the protection can 11.
To the positive electrode chamber 18 which is formed in the container body 15 is bonded by pressing a current collector 20 impregnated with sulfur 16 which is a positive electrode active material. In addition, an anode rod 21 made of metal is provided in the central portion of this current collector 20. At the bottom of the positive electrode chamber 18, the bottom lid 111 made of metal is bonded to glass adhesive to the lower end surface of the container body 15, the positive electrode chamber 18 is formed as a closed space. And the bottom lid 111 becomes the bottom of the protection can 11 by being welded to the peripheral portion side of the protection can 11.This bottom lid 111 is bonded to the anode rod 21.
Further, the sodium storage container 13 is joined to the cathode terminal 22, the upper portion of that protrudes upwardly through the through hole of the protection can 11. Furthermore, on the upper side of the protection can 11, an anode terminal 23 has been junction.
The sodium-sulfur battery 1 of Example 1 is composed of the above-described configuration.
This sodium-sulfur battery is used by heated to a temperature of 300-350 °C. At the time of discharge, the molten sodium 14 in the negative electrode chambers 18 acts as a sodium ion, transmits through the portion of the bulkhead of the solid electrolyte in the container body 15, moves to the positive electrode chamber 18, and reacts with molten sulfur 16 to generate a sodium sulfide. The same amount of molten sodium 14 which was moved to the positive electrode chamber 18 from the negative electrode chamber 19 by discharge is replenished from molten sodium 14 housed in a sodium storage container 13.
Therefore, at the time of discharge, the molten sodium 14 in the sodium storage container 13 is reduced and sodium sulfide in the positive electrode chamber 18 is increased. When charging, sodium sulfide in the positive electrode chamber 18 is decomposed, becomes sodium ions and molten sulfur 16. Sodium ions pass through the solid electrolyte partition of the container body 15, move into the negative electrode chambers 19 to generate molten sodium 14, and is returned to the sodium storage container 13.
In this sodium-sulfur battery 1, since the positive electrode chamber 18 and the negative electrode chambers 19 are provided inside the container body 15, the structure is very simple compared to the sodium-sulfur battery of conventional, parts that make up the battery can be decreased.
In addition, since the negative electrode chambers 19 are formed in the shape of the pores, and the volume of one per pore is small, it is possible to reduce the amount of molten sodium 14 which is housed. Because most of the molten sodium 14 is stored in the sodium storage container 13 which are provided with spaced apart from the positive electrode chamber 18, most of the molten sodium 14 can be away from the molten sulfur 16 each other, and safety increases.
Further, molten sodium 14 are accommodated by dividing it into a plurality of negative electrode chambers 19, even if the container body 15 damaged, the amount of molten sodium 14 which reacts directly with molten sulfur 16 is suppressed. Also, the amount of the molten sodium 14 housed in the negative electrode chambers 19 is a small.
But as mentioned above, because the molten sodium 14 is replenished from the sodium storage container 13, a certain amount of the sodium 14 can be always housed in the negative electrode chambers 19.
Therefore, the problem of reduced battery capacity by a lack off the molten sodium 14 does not occur. In addition, the biasing member 17 is disposed in a compressed state between the outer peripheral surface of the container body 15 and inner peripheral surface of the protection can 11. Thus, by the repulsive force of the compression, the biasing member 17 resiliently presses the container body 15 toward the center of its.
As a result, even if the container body 15 damaged and cracked, the power of pressurized is held down in the direction of closing the cracks. Therefore, it is possible to suppress the leaking of the molten sodium 14 from the crack, because the shape of the container body 15 before the crack occurs can be maintained.
The shape of the container body 15 is not limited to those shown in Example 1, is considered a variety of shapes. The cross-sectional views of a sodium-sulfur battery having a different shape of the container body of Example 1 are shown in Figure 4 through Figure 9.
The following will describe different shapes of the container body on the basis of Figure 4 through Figure 9. In addition, in Figure 4 through Figure 9, molten sulfur, the current collector and the anode rod is illustrated omitted.

### EXAMPLE 2

Figure 4 shows the cross-sectional view of a main portion of the sodium-sulfur battery of a second embodiment of the present invention. The sodium-sulfur battery of this embodiment is different from the positive electrode active material storage container that makes up the sodium-sulfur battery of Example 1. The shape of the container body is especially different. The other components will be omitted descriptions because they are almost identical to as the components of Example 1.
The container body 25 of sodium-sulfur battery of Example 2 is similar to the container body 15 of Example 1 shown in Figure 2, and is pillar shape extending in the axial direction of the circular periphery. This container body 25 is housed in a cylindrical protection can 11 of metal. Biasing member 17 is disposed between the outer peripheral surface of the container body 25 and the inner peripheral surface of the protection can 11. Inside of the container body 25, as shown in Figure 4, three relative positive electrode chambers 28 are formed.
Each of the positive electrode chambers 28 is a shape of a hole extending in the axial direction of the circular cross section. And a number of negative electrode chambers 29 are formed at equal intervals in the circumferential direction along each of the three positive electrode chambers 28 and at a slight distance from them. Each of the negative electrode chambers 29 is a shape of a pore extending in the axial direction. The container body 25 has three positive electrode chambers 28. Therefore the amount of molten sulfur housed in the positive electrode chambers 28 will be reduced. And the battery capacity per unit cell is reduced.
However, the number of positive electrode chambers 28 is three, not one. The area where the positive electrode chambers 28 and the negative electrode chambers 29 are in contact at intervals becomes wider. In other words, the area of the solid electrolyte partition becomes wilder. And more sodium ion can be transmitted through the electrolyte and reacts.
Further, some of the negative electrode chambers 29 works double. Namely, one negative electrode chamber functions to the adjoining two positive electrode chambers 28. Much more sodium ion can be transmitted through the electrolyte and react. Therefore, by such a shape of the container body 25, it is possible to increase the output of the battery per unit cell.

### EXAMPLE 3

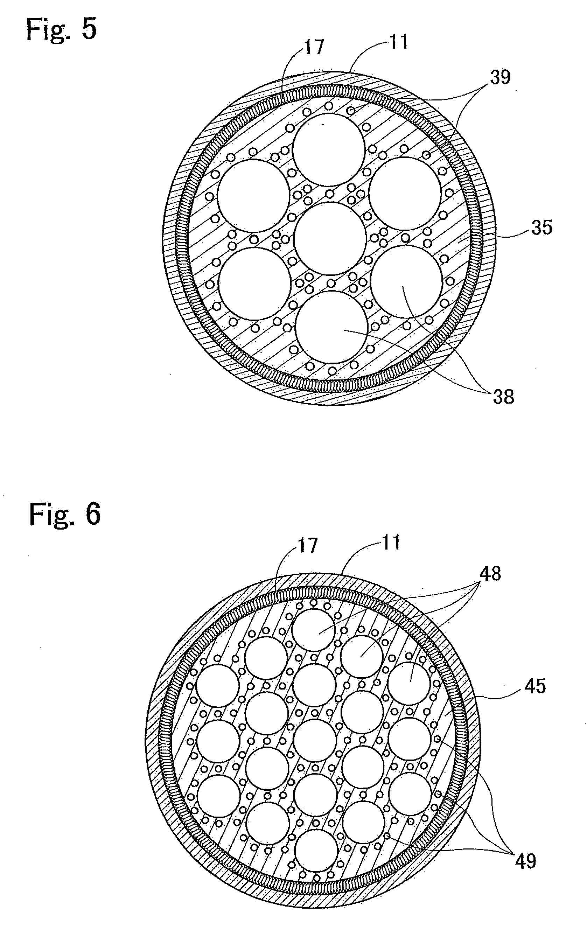

Figure 5 shows a cross-sectional view of an essential part of the sodium-sulfur battery of the third embodiment of the present invention.
Sodium-sulfur battery of this embodiment is different from the positive storage container which makes up the sodium-sulfur battery of Example 1. Especially, it is different from the shape of the container body. Other descriptions will be omitted because they are almost identical to the other components as in Example 1.
This container body 35 is a pillar shape extending in the axial direction of the circular periphery.
The container body 35 is housed in a cylindrical protection can 11 made of metal. Biasing member 17 is disposed between the outer peripheral surface of the container body 35 and the inner peripheral surface of the protection can 11. Inside of the container body 35, seven positive electrode chambers 38 are formed.
Each positive electrode chamber 38 is a shape of a hole extending in the axial direction of the circular cross section. And a number of negative electrode chambers 39 are formed at equal intervals in the circumferential direction along the walls of the seven positive electrode chambers 38 and at a slight distance from this wall.
Each of the negative electrode chambers 39 has a shape of a pore extending in the axial direction. By such a shape of the container body 35, the amount of molten sulfur housed in the positive electrode chamber 38 will be further reduced. However, since the number of the positive electrode chambers 38 is further increased, wide area can be used as the solid electrolyte partition.
In addition, since the number of the negative electrode chambers 29 which are also used as the adjoining positive electrode chambers 38 also increases, much more sodium ion can be transmitted through the electrolyte and react. Therefore, by such a shape of the container body 35, it is possible to increase the output of the battery per unit cell.

### EXAMPLE 4

Figure 6 shows a cross-section of an essential part of the sodium-sulfur battery of the fourth embodiment of the present invention. Similar to the container body 15 in Figure 2, the container body 45 of sodium-sulfur battery of this embodiment is a pillar shape extending in the axial direction of the circular periphery.
The container body 45 is housed in a cylindrical protection can 11 made of metal, biasing member 17 is disposed between the outer peripheral surface of the container body 45 and the inner peripheral surface of the protection can 11. Inside of the container body 45, as shown in Figure 6, nineteen positive electrode chambers 48 are formed.
Each of the positive electrode chambers 48 is a shape of a pore extending in the axial direction of the circular cross section. And a number of negative electrode chambers 49 are formed at equal intervals in the circumferential direction along the walls of the nineteen positive electrode chambers 48 and at a slight distance from each of the positive electrode chambers 48.
Each of the negative electrode chambers 49 is a shape of a pore extending in the axial direction. By such a shape of the container body 45, although the battery capacity per unit cell is reduced, due to the same reason as that described in Example 2 and Example 3, it is possible to increase the output of the battery further.

### EXAMPLE 5

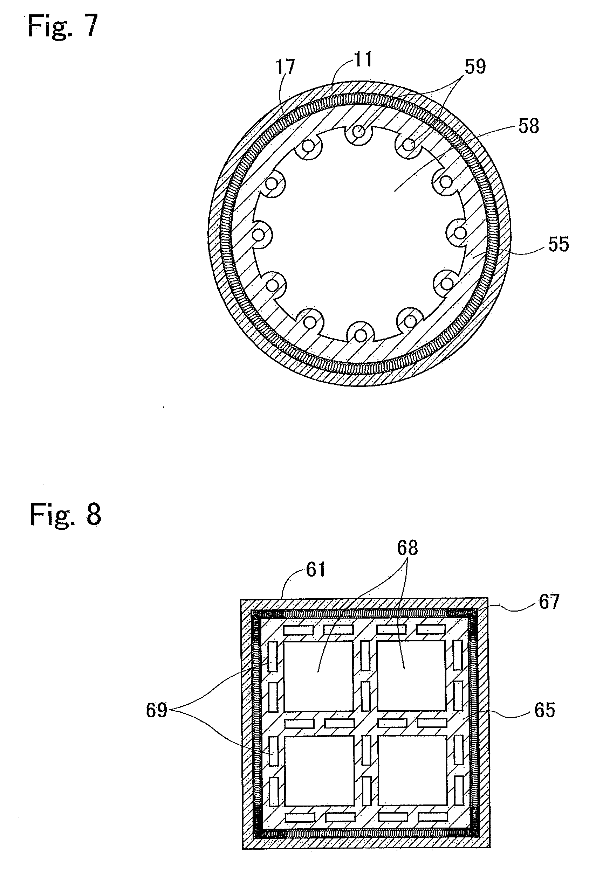

Figure 7 shows a cross-sectional view of an essential part of the sodium-sulfur battery of the fifth embodiment of the present invention. Similar to the container body 15 in Figure 2, the container body 55 of the sodium-sulfur battery of this embodiment is a pillar shape extending in the axial direction of the circular periphery.
The container body 55 is housed in a cylindrical protect can 11 made of metal, biasing member 17 is disposed between the outer peripheral surface of the container body 55 and the inner peripheral surface of the protection can 11. Inside of the container body 55, as shown in Figure 7, a positive electrode chamber 58 which is one hole shape extending in the axial direction of a substantially circular cross section is formed.
The positive electrode chamber 58 has semicircular convex portions on throughout of the circumferential surface at regular intervals. And a number of negative electrode chambers 59 are formed within each of the semicircular convex portions. Each of the negative electrode chambers 59 is a shape of a pore extending in the axial direction and is close of the positive electrode chamber 58.
By such a shape of the container body 55, the number of negative electrode chambers 59 which can be formed inside is reduced. However, the area of the partition wall which acts as the solid electrolyte can be enlarged. Therefore, it is possible to increase the output of the battery per unit cell.
In addition, since a volume of the positive electrode chamber 58 is larger in accordance with the number of the negative electrode chambers 59 is reduced, it is possible to accommodate more molten sulfur. Therefore, it is possible to increase the battery capacity per unit cell.

### EXAMPLE 6

Figure 8 shows a cross-sectional view of an essential part of the sodium-sulfur battery of the sixth embodiment of the present invention.
Unlike the container body 15 in Figure 2, the container body 65 of sodium-sulfur battery of this embodiment is a columnar outer circumferential shape of a rectangle that extends in the axial direction. The container body 65 is housed in a cylindrical protection can 61 made of metal, biasing member 67 is disposed between the outer peripheral surface of the container body 65 and the inner peripheral surface of the protection can 61. The outer peripheral shape of the protection can 61 is rectangle. Inside of the container body 65, four positive electrode chambers 68 are formed. The shape of the positive electrode chamber 68 is a shape of a hole extending in the axial direction of a rectangular cross section.
And negative electrode chambers 69 are formed continuously at regular intervals in the walls which divide the four positive electrode chambers 68. Each of the negative electrode chambers 69 is a shape of holes extending in the axial direction of a rectangular cross section.
By such a shape of the container body 65, it is possible to form the positive electrode chambers 68 and the negative electrode chambers 69 effectively in a certain space. In addition, since the negative electrode chambers 69 formed within the inner wall of the adjoining two positive electrode chambers 68 are also used to send sodium ions to the adjoining two positive electrode chambers 68. A large amount of sodium ions can be transmitted through the electrolyte, and react.
The four apex portions of the biasing member 67 made of carbon mat are accommodated between the container body 65 and the protection can 61 in a compressed state at high density than other portions. Namely, the urging member 67 is disposed to press strongly the four top portions of the container body 65 of rectangular cross-section and to press weakly the four middle portions between the two adjacent top portions.
Apex portions of a polygonal-shaped box are strong against an outside force compared to the intermediate portions between the two adjacent apex portions. Because vertices of the polygonal part have the strong nature to external pressure than in other parts, the entire outer surface can be pressurized well-balanced by varying the pressure in each part, In this way, it is possible to be held down the crack part in the direction of crack closing, and to maintain the shape of the container body 65.

### EXAMPLE 7

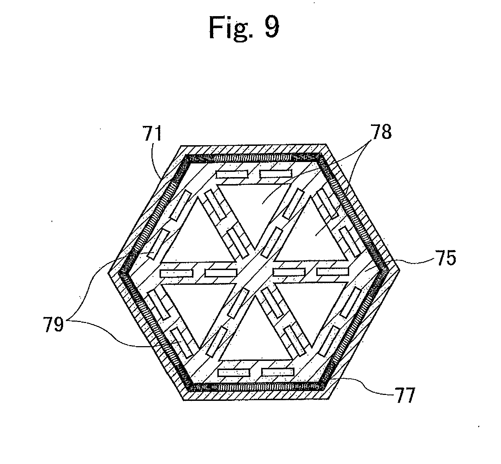

Figure 9 shows a cross-sectional view of an essential part of the sodium-sulfur battery of Example 7 of the present invention.
Unlike the container body 15 of Figure 2, a container body 75 of the sodium-sulfur battery of this embodiment is a pillar shape that its outer peripheral shape is extending in the axial direction of hexagon. The container body 75 is housed in a cylindrical protection can 71 made of metal, biasing member 77 is disposed between the outer peripheral surface of the container body 75 and the inner peripheral surface of the protection can 71.
The outer peripheral shape of the protection can 71 is hexagon. Inside of the container body 75, six hole-shaped positive electrode chambers 78 extending in the axial direction of a triangular cross-section are formed. Each of six top portions of the six chambers 78 are located in the center of the body 75, and each of six base portions of the six chambers 78 are located in the peripheral of the body 75.
And a number of the negative electrode chambers 79 are formed at regular intervals within the walls of the body 75 forming the six positive electrode chambers 78 and at a slight distance from the chambers 78. Each of the negative electrode chambers 79 is a shape of a hole extending in the axial direction of a rectangular cross section.
By such a shape of the container body 75, it is possible to form the positive electrode chambers 78 and the negative electrode chambers 79 effectively in a certain space. In addition, since a number of the negative electrode chambers 79 which are also used as the adjoining two positive electrode chambers 78 are formed, many sodium ion can be transmitted through the wall acting as the electrolyte, and react.
Further, the urging member 77 consisting of carbon fiber mat is disposed in the six top portions of the container body 75 of hexagonal cross section in a compressed state with high density.
Furthermore, the biasing member 77 is disposed along one side of the container body 75 from the one vertex in a state of being compressed to a low density gradually, and as close to the other vertex, the biasing member 77 is disposed in a state of being compressed to a high density gradually.
By placing the biasing member 77 in this way, pressure toward the center of the container body 75 can be changed for each part, and the entire outer surface can be pressurized well-balanced. In this way, it is possible to be held down the crack part in the direction of crack closing, and to maintain the shape of the container body 75.

### EXAMPLE 8

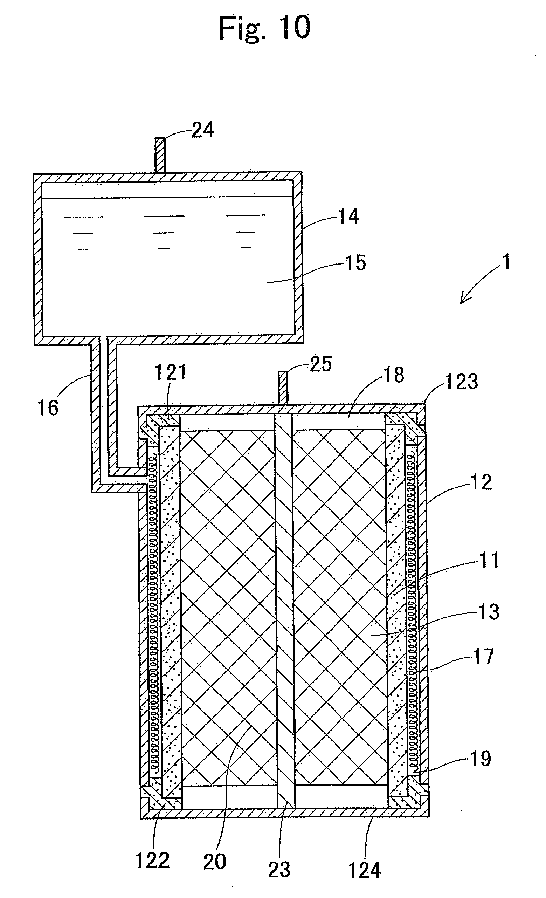

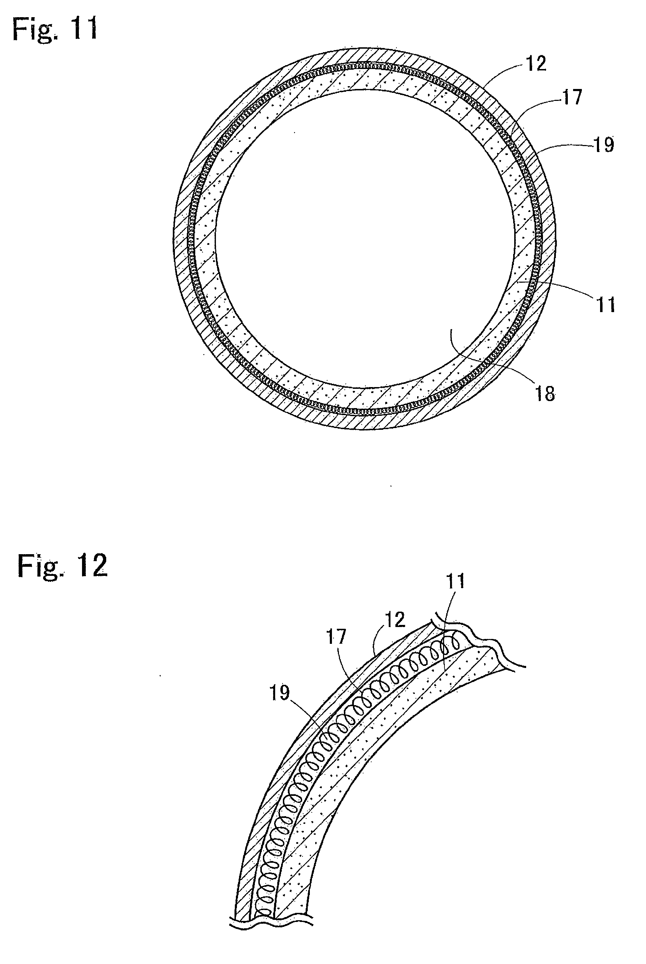

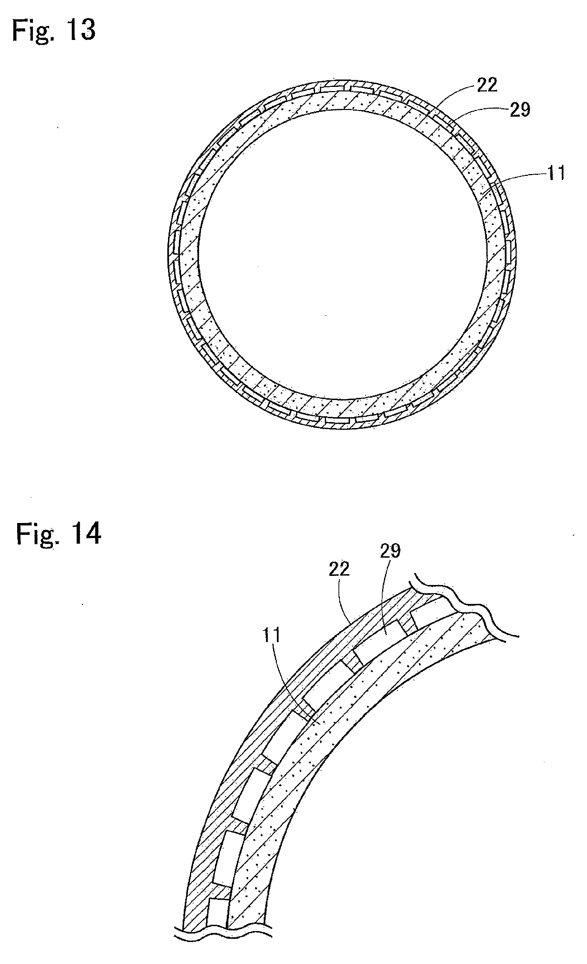

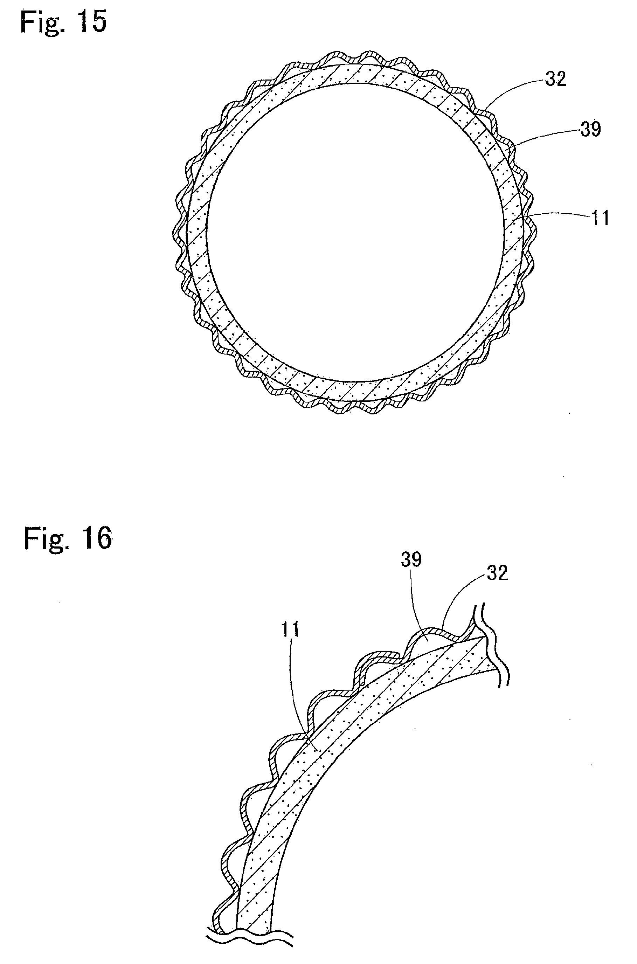

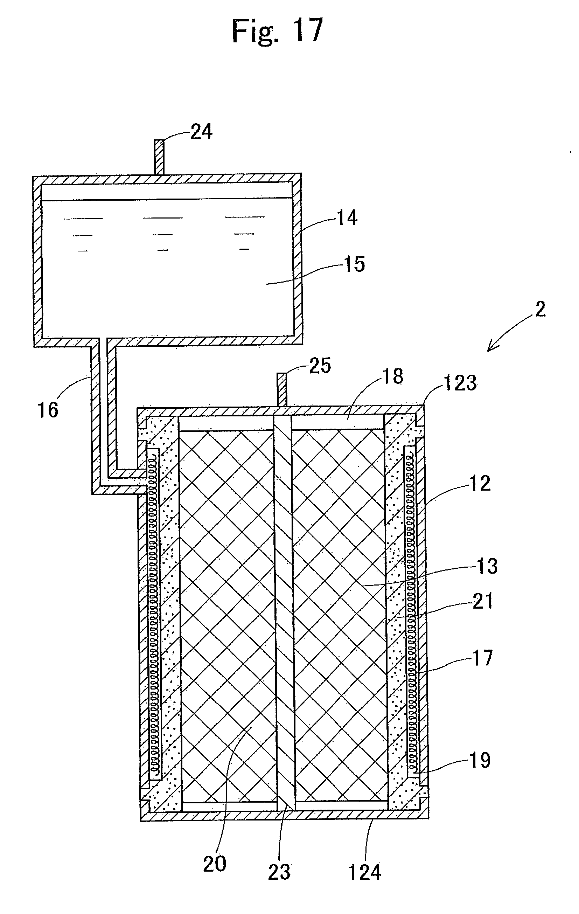

Figure 10 shows a vertical cross-sectional view of the sodium-sulfur battery of Example 8 of the present invention, Figure 11 shows a cross-sectional view of it, and Figure 12 shows a partial enlarged view of it. This sodium-sulfur battery 1 is composed primarily of a circular cylindrical positive container body 11 made of β-alumina, molten sodium 13 maintained in the inside space of this container body11, a cylindrical negative electrode member 12, a sodium storage container 14, molten sodium 15 maintained in the inside space of the sodium storage container 14, a communicating pipe 16 and a biasing member 17. The positive container body 11 has a positive electrode chamber 18.
The negative electrode member 12 is made of a metal plate, is disposed on the outer peripheral surface of the positive container body 11. A negative electrode chamber 19 is formed between the positive container body 11 and the negative electrode member 12. The sodium storage container 14 is provided separately and independently from the negative electrode member 12 and the positive container body 11. Most of the molten sodium 15 is maintained in the sodium storage container 14, and the rest of the molten sodium is kept in the negative electrode chamber 18.
The communicating pipe 16 is made of metal and communicates with the sodium storage container 14 and the negative electrode member 12.
The biasing member 17 is made of a carbon fiber mat. The biasing member 17 is disposed in a compressed state between the outer peripheral surface of the positive container body 11 and the inner peripheral surface of the negative electrode member 12.
The positive container body 11 is cylindrical as shown in Figure 11. Its wall is thick. Its shaft hole forms the positive electrode chamber 18. The negative electrode member 12 is provided outside of the positive container body 11 across a small gap. The small gap is a thin cylindrical space which becomes a negative electrode chamber 19. Namely the negative electrode chamber 19 is shaped by the outer peripheral surface of the positive container body 11 and the inner peripheral surface of the negative electrode member 12. The biasing member 17 is held in the negative electrode chamber 19 in a compressed state. The positive container body 11 is produced by a known method to obtain a rod-shaped molding in ceramic extrusion, cut into a predetermined length, heated, the degreasing step is performed except the binder which is resin or the like, and then, sintered.
In addition, the positive container body 11 can be also machined a block-shaped compaction body which was compacted solid electrolyte powder into a predetermined shape, and then be produced by sintering.
A first sealing ring 121 made of α-alumina is fixed on the top surface of the positive container body 11 and on the top surface of the negative electrode member 12 by glass bonding adhesive or the like. The first sealing ring 121 serves to seal the upper end opening of the negative electrode chamber 19.
An upper lid 123 made of metal is fixed on the top surface of the first sealing ring 121 by glass bonding adhesive or the like. The upper lid 123 is coupled to the insulating with the negative electrode roll 12 through the first sealing ring 121.
A second sealing ring 122 made of α-alumina is fixed on the bottom surface of the positive container body 11 and on the bottom portion of the negative electrode member 12 by glass bonding adhesive or the like. The second sealing ring 122 seals the lower end opening of the negative electrode chamber 19. The negative electrode chamber 19 is formed as a closed space.
A lower lid 124 made of metal is fixed on the bottom surface of the second sealing ring 122 by glass bonding adhesive or the like, The positive electrode chamber 18 is formed as a closed space.
In addition, the lower lid 124 is coupled to the insulating with the negative electrode member 12 through the second sealing ring 122. The parts described above constitute a positive electrode active material storage container of the present invention. At the top of the lid 123 of this positive electrode active material storage container, the sodium storage container 14 isolated as a separate body from the positive electrode active material storage container is placed.
The communicating pipe 16 made of metal passes through the lower end surface of the sodium storage container 14 and the side end surface of the negative electrode member 12 respectively, and is welded at through portion.
Molten sodium 15 is maintained in the sodium storage container 14, passes through the connecting pipe 16, flows into the negative electrode chamber 19 extending in the shape of a ring, then, the entire negative electrode chamber 19 is filled with the molten sodium 15.
The biasing member 17 consisting of carbon fiber mat is disposed in the negative electrode chamber 19 in a compressed state in its thickness direction. The urging member 17 is sandwiched between the outer peripheral surface of the positive container body 11 and the inner circumferential surface of the negative electrode member 12, as shown in Figure 10.
Sulfur 13 which is a positive electrode active material is impregnated within an electricity collector 20 which is made of carbon fiber felt. The electricity collector 20 is housed in the positive electrode chamber 18 which is formed in the positive container body 11.
Further, an anode rod 23 made of metal is provided in the central portion of the electricity collector 20 and is bonded to the lower lid 124. In addition, the sodium storage container 14 is bonded to a cathode terminal 24. Further, the upper lid 123 is joined to an anode terminal 25.
The sodium-sulfur battery of Example 8 is composed of the above-described configuration.
This sodium-sulfur battery is heated to a temperature of 290 °C~350 °C. At a time of discharge, the molten sodium 15 in the negative electrode chamber 19 makes sodium ions, transmits through a portion of the solid electrolyte partition of the positive container body 11, move to the positive electrode chamber 18, and react with molten sulfur 13 to generate sodium sulfide. The same amount of molten sodium 15, which was moved from the negative electrode chamber 19 to the positive electrode chamber 18 by discharge, is replenished from the sodium storage container 14.
Therefore, at the time of discharge, the molten sodium 15 in the sodium storage container 14 is reduced and sodium sulfide in the positive electrode chamber 18 is increased.
At a time of charge, sodium sulfide in the positive electrode chamber 18 is decomposed, becomes sodium ions and molten sulfur 16. Sodium ions pass through a portion of the solid electrolyte partition of the container body 11, move to the negative electrode chamber 19 to generate molten sodium 15, and are returned to the sodium storage container 14.
In this sodium-sulfur battery 1, the inside space of the positive container body 11 is the positive electrode chamber 18, and a small space between the outer peripheral surface of the positive container body 11 and the inner circumferential surface of the negative electrode member 12 is used as the negative electrode chamber 19. For this reason,
the molten sodium 15 which is high activity can not be accommodated only a small amount in that small space.
Even if the container body 11 damaged, molten sodium 15 does not leak in large amounts. Therefore, the sodium-sulfur battery of Example 8 has a high level of safety Because most of the molten sodium 15 is stored in the sodium storage container 14 which is provided with spaced apart from the positive electrode chamber 18, most of the molten sodium 15 can be away from the molten sulfur 13 each other, and safety increases.
In addition, since almost all regions of the outer peripheral surface of the positive container body 11 forms the negative electrode chamber 19, it is possible to secure a large area of the container body 11 functions as a partition wall of the solid electrolyte, and battery output is also large. The amount of the molten sodium 15 housed in the negative electrode chamber 19 is small.
However, as mentioned above, because the molten sodium 15 is replenished from the sodium storage container 14, a certain amount of the sodium 15 can be always housed in the negative electrode chamber 19. Therefore, the problem of reduced battery capacity by a lack of the molten sodium 15 does not occur.
In addition, the urging member 17 is disposed in a compressed state between the outer peripheral surface of the positive container body 11 and inner peripheral surface of the negative electrode member 12. Thus, by the repulsive force of the compression, the urging member 17 resiliently presses the positive container body 11 toward the center of its.
In addition, because the positive electrode chamber 18 is sealed under vacuum, the positive container body 11 is pressed axially by the atmosphere. The pressure of the atmosphere presses the positive container body 11 through the negative electrode member 12 and the urging member 17.
For this reason, even if the positive container body 11 is damaged and cracked, the power of the atmosphere and the urging member 17 press the positive container body 11 to close the cracks that would occur. Therefore, it is possible to suppress the leaking of the molten sodium 15 from the crack, because the shape of the positive container body 11 before the crack occurs can be maintained.
The shape of the negative electrode member 12 is not limited to those described above.
For example, a second negative electrode member 22 can also be used as shown in Figure 13. Figure 13 is a cross-sectional view of a positive container body 11 which is formed of the solid electrolyte and a second negative electrode member 22 provided on the outside of the container body 11. In addition, Figure 14 is a partial enlarged view of that.
As shown in Figures 13, 14 the second negative electrode member 22 is disposed on the outer peripheral surface of the positive container body 11. A feature of this second negative electrode member 22 is that it has rectangular protrusions extending in the axial direction from the inner surface thereof at equally spaced.
To provide the second negative electrode member 22, the following method is preferable.
First, a plate with rectangular protrusions on one side thereof is provided. The plate is one which the second negative electrode member 22 of circular shape as shown in Figure 13 is open. The length in the longitudinal direction of the plate is formed a little shorter than the length of the circumference of the positive container body 11. Then, wrap the plate around the container body 11 along the direction of the outer peripheral surface.
Both ends of the plate wrapped along the direction of the outer peripheral surface are closed to junction in the state pulled. For this reason, the tips of a plurality of protrusions of a rectangular shape formed on the inner surface of the second negative electrode member 22 is in contact with the outer peripheral surface of the positive container body 11, and the tips of the protrusions press the side of the outer peripheral surface of the container body 11 toward its center of the axis.
In addition, because the positive electrode chamber 18 is sealed under reduced pressure, the positive container body 11 is pressed in the axial direction from the outside of the positive container body 11, further in the axial direction from the side of both ends of the positive container body 11 by the pressure difference with the atmosphere. As a result, the positive container body 11 is pressed in the direction such that the shape of the positive container body 11 becomes smaller. In other words, the circumferential length and the axial length of the positive container body 11 are pressed to become shorter.
For this reason, even if the positive container body 11 is damaged and cracked, the force acts in a direction to close the cracks. Thus, it is possible to suppress the outflow of the molten sodium 15 through the cracks, and the shape of the container body 11 before the crack occurs can be maintained.
In this case, the spaces formed between the inner surfaces of the second negative electrode member 22 and the outer surfaces of the positive container body 11 become the negative electrode chamber 29. The molten sodium is housed in the spaces.
Further, it is also possible to use a third negative electrode member 32 as shown in Figure 15. Figure 15 is a cross-sectional view of a positive container body 11 made of a solid electrolyte. The third negative electrode member 32 is provided on the side of outer surface of the positive container body 11. In addition, Figure 16 is a partial enlarged view of that.
The corrugated sheet which has a wavy shape will be featured of the third negative electrode member 32. The negative electrode member 32 has the protrusions which are continuously arranged alternately on both sides of the outer and the inner surfaces thereof. The negative electrode member 32 is provided by the same method as described above, and has the same effect as that of the second negative electrode member 22.
In this case, the hole formed between two of the projections next to each other forms a part of the negative electrode chamber 39, and the molten sodium 15 is housed in the hole. can also be used as. The shape of the positive container body 11 is not limited to those described above. For example, a positive container body 21 shown in Figure 17 can also be used as the positive container body 11.
Figure 17 is a longitudinal sectional view of a sodium-sulfur battery 2 which uses the positive container body 21 formed of the solid electrolyte. The positive container body 21 is formed longer than the axial length of the container body 11, and each step portion is provided on the circumferential surfaces of the upper end and the lower end of the container body 21.
An upper lid 123 and a bottom lid 124 are bonded directly on the top and the bottom surfaces of the positive container body 21 by glass bonding adhesive or the like. In addition, a negative electrode member 12 is bonded with each of the upper and bottom step portions of the positive container body 21 by glass bonding adhesive or the like.
The positive container body 21 does not use the first sealing ring 121 and the second sealing ring 122 shown in Figure 10. The positive container body 21 can simplify the structure of the sodium sulfur battery and to lower the cost thereof

### EXAMPLE 9

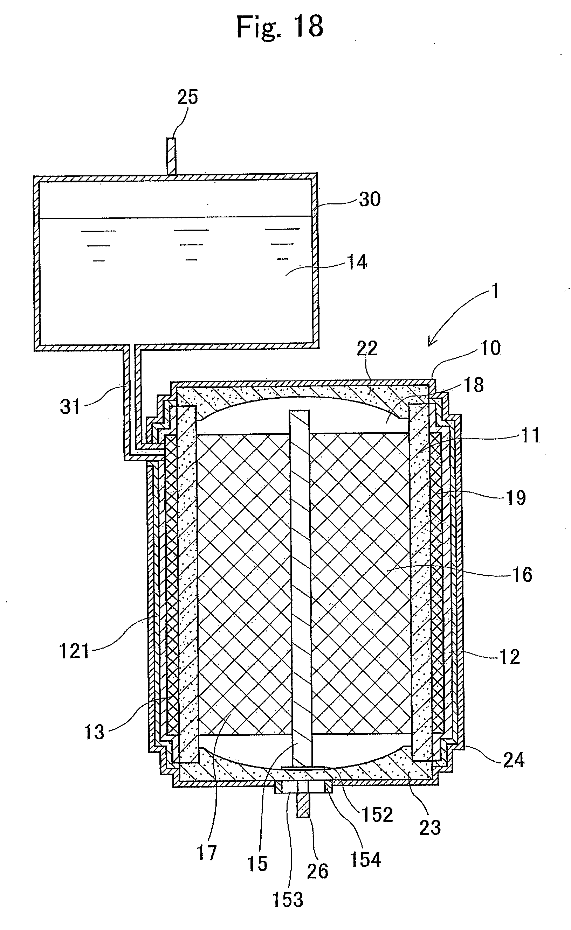

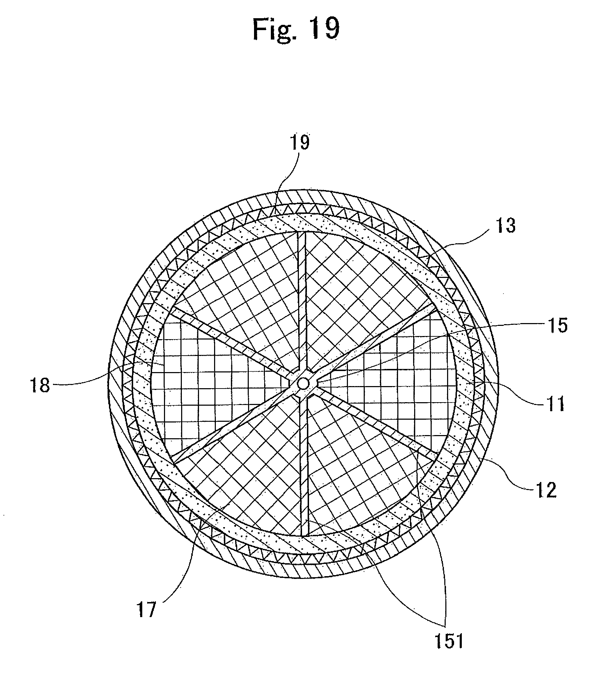

Figure 18 shows a longitudinal cross-sectional view of a sodium-sulfur battery 1 of Example 9 of the present invention. A cross-secfiional view of it is shown in Figure 19. This sodium-sulfur battery 1 is composed of a positive storage container 10 and a negative storage container 30. The positive storage container 10 is circular cylindrical. The negative storage container 30 is separate and independent from the positive storage container 10.
The positive storage container 10 is composed primarily of a circular cylindrical positive container body 11 made of β-alumina, an electrode chamber 18 formed in the inside of the container body 11, molten sulfur 16 maintained in this inside space of the container body 11, a cylindrical outer shell body 12 made of a metal plate and disposed apart from the outer circumference of the container body 11, a negative electrode chamber 19 formed as a ring-shaped gap between this outer shell body 12 and the container body 11, a lid 22 , a bottom lid 23, and a flexible sheet 24 made of aluminum foil covering in airtight the outer peripheral surface of the positive storage container 10.
A part of molten sodium 14 is maintained in the negative electrode chamber 19. The lid 22 and the bottom lid 23 are made of α-alumina to seal the upper and lower end portions of the container body 11,
The container body 11 as shown in Figure 19 is cylindrical, thick. The positive electrode chamber 18 is formed in the container body 11. An anode rod 15 extending in the axial direction is disposed in the positive electrode chamber 18. The anode rod 15 is inserted through the bottom lid 23 and its lower end is fixed to the bottom lid 15. This anode rod 15 has six plate-shaped spacing pieces 151 radially extending in a radial direction of the container body 11. By this, the positive electrode chamber 18 has six sections.
A conductive material 17 impregnated with sulfur 16 is accommodated respectively in these six sections at the time of assembly, Then, the positive electrode chamber 18 is formed. In addition, as shown in Figure 19, the anode rod 15 has a shape of a hollow in the axial direction and is used to adjust the pressure in the positive electrode chamber 18 at the time of battery assembly.
The outer shell body 12 is disposed at short intervals along the inner circumferential surface of the container body 11. The ring-shaped a little space which is extending in the circumferential direction and is partitioned by the outer peripheral surface of the container body 11 and the inner peripheral surface of the outer shell body 12 is used as the negative electrode chamber 19. In the negative electrode chamber 19, porous spacer 13 made of compressed metal fiber is held.
The negative electrode active material storage container 30 is disposed separately and independently from the positive electrode active material storage container 10. A communicating pipe 31 made of metal passes through the lower end of the negative storage container 30 and the outer shell body 12 respectively, and is welded at the through portions.
Most of molten sodium 14 which is negative electrode active material is maintained in the negative storage container 30, passes through the connecting pipe 31, and flows into the negative electrode chamber 19 extending in the shape of a ring, then, the entire negative electrode chamber 19 is filled with the molten sodium 14.
A cathode terminal 25 is joined to an upper end surface of the negative storage container 30. The lid 22 formed from α-alumina is fixed on the upper end surface of the container body 11 by glass bonding, brazing, and diffusion bonding due to heat or the like.
This lid 22 serves to seal the upper end opening of the positive electrode chamber 18. The bottom lid 23 formed from α-alumina is fixed on the lower end surface of the container body 11 by glass bonding, brazing, and diffusion bonding due to heat or the like. The bottom lid 23 seals the lower end opening of the positive electrode chamber 18, and the positive electrode chamber 18 is formed as a closed space.
In addition, fastening means for fastening the bottom lid 23 in the axial direction is provided with the lower end of the anode rod 15, the bottom lid 23 is further firmly sealed.
The fastening means is composed of a helical screw groove formed on the lower end of the anode rod 15, a washer 152 arranged on the inside of the bottom lid 23, a metal nut 153 screwed into the screw groove of the anode rod 15, and a bottom lid 23 tightened in the axial direction by the metal nut 153. An anode terminal 26 is joined to the tip of the metal nut 153.
Further, the cylindrical outer shell body 12 has an upper narrow end portion and a lower narrow end portion which form narrow openings as shown in Figure 18. The formed narrow portions are brought into contact with the outer peripheral surface of the container body 11 and are fixed by brazing or diffusion bonding due to heat, etc. Then the negative electrode chamber 19 is formed as a closed space.
The positive electrode active material storage container 10 is further covered by a flexible sheet 24 from the outside and is sealed in airtight. The flexible sheet 24 is composed of aluminum foil having a predetermined thickness.
As a means for sealing hermetically the positive storage container 10, the following shall be considered.
First, aluminum foil is molded to a shape of a bag-shaped aluminum foil in advance. Next the positive electrode active material storage container 10 is housed in the bag-shaped aluminum foil. After that, a straw-like tube is inserted from the opening portion of the bag-shaped aluminum foil. The gas (air) of inside is aspirated..
At this time, the gas which was present between the outer peripheral surface of the positive storage container 10 and the inner peripheral surface of the bag-shaped aluminum foil is removed. And the inner circumferential surface of the bag-shaped aluminum foil 24 is a state of being pressed and bonded by atmospheric pressure on the outer peripheral surface of the positive storage container 10. In this state, the straw-like tube is removed from the opening portion of the bag-shaped aluminum foil, and openings are welded with each other.
By this way, the positive storage container 10 can be hermetically sealed by a flexible sheet 24. At this time, as shown in Figure 18, a cylindrical electrical insulating member 121 is placed between the outer shell body 12 and flexible sheet 24, and it insulates electrically the outer shell body 12 and the flexible sheet 24.
In addition, the metal nut 153, the positive electrode terminal 26 and the communicating pipe 31 pass through the flexible sheet 24. The tip of the terminal 26 is exposed to the outside of the flexible sheet 24. Further, since the communicating pipe 31 is electrically connected to the outer shell body 12, as shown in Figure 18.
The electrical insulating member 121 is placed between the communicating pipe 31 and the flexible sheet 24.
Furthermore, as shown in Figure 18, an insulation ring 154 is placed between the metal nut 153 and the flexible sheet 24. The metal nut 153 is electrically insulated from the flexible sheet 24. The positive storage container 10 of the sodium-sulfur battery 1 is simple in structure is sealed in airtight as described above.
In addition, there is no possibility of leaking of the molten sodium 14 and the molten sulfur 16 to the outside of the battery by being sealed and housed by the flexible sheet 24 from outside. Thus, it is possible to ensure a high level of safety.
Also, the pressure acting on the outer surface of the outer shell body 12 acts as a force to compress the circumferential direction of the container body 11 through the porous spacer 13 held in the negative electrode chamber 19.
By this, even if the container body 11 damaged and cracked, the force of compression is held down the crack parts in the direction of closing the cracks. Thus, it is possible to suppress the leaking of the active material from the crack, because the shape of the container body can be maintained.

### EXAMPLE 10

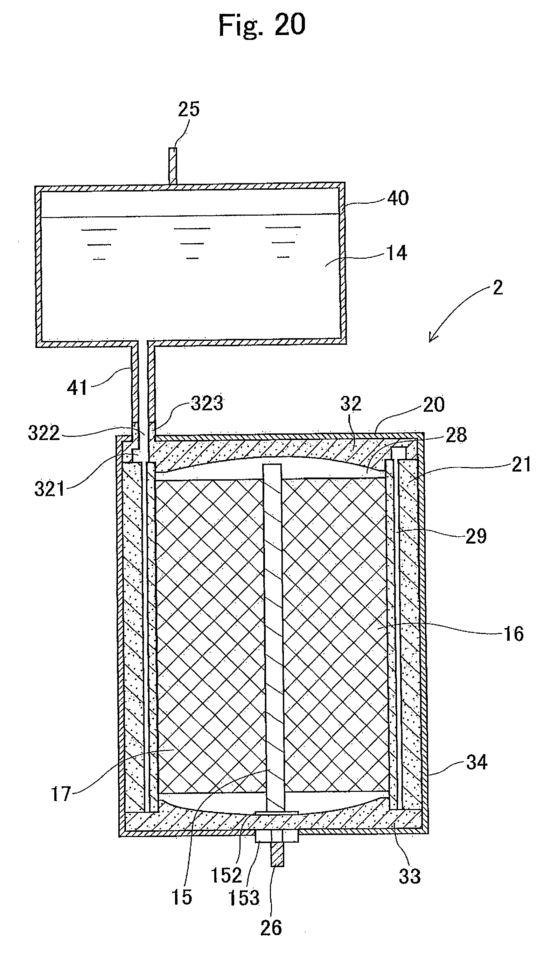

Figure 20 shows a longitudinal cross-sectional view of a sodium-sulfur battery 2 of Example 10 of the present invention.
This sodium-sulfur battery 2 is composed of a circular cylindrical positive electrode active material storage container 20 and a negative electrode active material storage container 40 which is separate and independent from the positive electrode active material storage container 10.
The positive storage container 20 is composed primarily of a circular cylindrical container body 21 made of β-alumina, a positive electrode chamber 28 formed in the inside space which is a shaft hole of the container body 21, molten sulfur 16 maintained in this inside space, a number of pore-shaped negative electrode chambers 29 formed along the inner circumferential surface of the container body 21 extending in the axial direction at small intervals and placed at intervals in the circumferential direction, molten sodium 14 maintained in the negative electrode chambers 29 pore, a lid 32 , a bottom lid 33 both of which are made of α-alumina to seal the upper and lower end portions of the container body 21, and flexible sheet 34 made of aluminum foil covering in airtight the outer peripheral surface of the positive storage container 20.
The container body 21 is cylindrical, thick, and its inner space corresponding to the shaft hole is the positive electrode chamber 28. Also, similar to that described in Example 9, an anode rod 15 extending in the axial direction and having spacing pieces are disposed in the positive electrode chamber 28. The lower end of the anode rod is inserted through the bottom lid 23.
In addition, a conductive material 17 impregnated with sulfur 16 is accommodated in the compartment formed by the spacing pieces. Then, the compartment constitutes the positive electrode chamber 28.
Many negative electrode chambers 29 are formed so as to surround the positive electrode chambers 28 along the inner wall surface of the container body 21. On the top end surface of the container body 21, the lid 32 made from α-alumina is fixed integrally by glass bonding, brazing, or diffusion bonding due to heat or the like. This lid 32 serves to seal the upper end opening of the positive electrode chamber 28.
Further, this lid 32 has a ring-shaped groove on its lower surface, and a ring-shaped passage 321 is formed that the opening surface of this groove is closed at the upper end surface of the container body 21. This ring-shaped passage 321 communicates with the upper end opening of all negative electrode chambers 29 of the container body 21.
The upper surface of the lid 32 has an outlet passage 323 which is extending to the ring-shaped passage 321 and its inside is vertical passage 322. The outlet passage 323 is fixed to a communicating pipe 41 leading to the negative storage container 40.
On the lower end surface of the container body 21, the bottom lid 32 made from α-alumina is fixed integrally by glass bonding, brazing, or diffusion bonding due to heat or the like.
This bottom lid 33 seals the lower end opening of the negative electrode chambers 29 provided at equal intervals in the circumferential direction of the container body 21 and the lower end opening of the positive electrode chamber 28.
The openings of the negative electrode chambers 29 and the opening of the positive electrode chamber 28 are a closed. In addition, fastening means for fastening the bottom lid 33 in the axial direction is provided with the lower end of the anode rod 15, the bottom lid 33 is further firmly sealed.
The fastening means is composed of a helical screw groove of the anode rod 15, a washer 152 arranged on the inside of the bottom lid 33, and a metal nut 153 screwed into the screw groove of the anode rod 15. The bottom lid 23 is tightened in the axial direction by the metal nut 153. In addition, the tip of the metal nut 153 is joined to an anode terminal 26.
The negative storage container 40 is separated independently from the positive storage container 20. The communicating pipe 41 made of metal passes through the lower end surface of the negative storage container 40, further, the other end is fixed by welding with an outlet passage 323.
Most of molten sodium 14 which is negative electrode active material is maintained in the negative storage container 40. The molten sodium 14 passes through the connecting pipe 41, the vertical passage 322, and the ring-shaped passage 321, and flows into all the negative electrode chambers 29, then, the entire negative electrode chambers 29 are filled with the molten sodium 14.
In addition, the upper end surface of the negative storage container 40 is joined to a cathode terminal 25. Further, the positive storage container 20 is covered by a flexible sheet 34 from the outside and is sealed in airtight.
The flexible sheet 34 is composed of aluminum foil having a predetermined thickness. Means for sealing in airtight by this flexible sheet 34 is similar to that described in Example 1. At this time, the metal nut 153, the anode terminal 26 and the outlet passage 323 pass through the aluminum foil and are exposed to the outside of the flexible sheet 34.

## Claims

1. A solid electrolyte secondary battery which is **characterized by** having
a negative electrode active material,
a positive electrode active material,
a negative storage container for housing a part of said negative electrode active material, and
a positive storage container being formed separately from said negative storage container,
said positive storage container being made of a solid electrolyte which separate at least a part of a positive electrode chamber housing said positive electrode active material and at least a part of a negative electrode chamber housing the rest of said negative electrode active material.

2. According to a solid electrolyte secondary battery of claim 1, wherein said positive storage containers has at least one said positive electrode chamber, and a plurality of said negative electrode chambers partitioned along a wall of said positive electrode chamber.

3. According to a solid electrolyte secondary battery of claim 2, wherein both of said positive and negative electrode chambers have a shape of a hole extending along the axial direction.

4. According to a solid electrolyte secondary battery of claim 3, wherein said positive storage container is pillar shape.

5. According to a solid electrolyte secondary battery of claim 1, wherein said solid electrolyte secondary battery has an urging member in contact with the outer surface of at least a portion of said positive storage container for urging the center side of said positive storage container.

6. According to the solid electrolyte secondary battery of claim 1, wherein said positive storage container is composed of a cylindrical container body formed of said solid electrolyte to partition said positive electrode chamber inside and a negative electrode member covering the outer peripheral surface of said container body and forming said negative electrode chamber between the outer peripheral surface of said container body and the inner peripheral surface of said negative electrode member..

7. According to the solid electrolyte secondary battery of claim 6, wherein said negative electrode member has ridges extending in the axial direction on the inner side at predetermined interval and those tips press the outer peripheral surface of said cylindrical wall.

8. According to the solid electrolyte secondary battery of claim 6, wherein said negative electrode member has a wavy section extending along the outer peripheral surface of said cylindrical wall.

9. According to the solid electrolyte secondary battery of claim 6, wherein said negative electrode chamber has a porous spacer.

10. According to the solid electrolyte secondary battery of claim 1, wherein said positive storage container has a cylindrical wall formed of said solid electrolyte, a lid and a bottom lid made of ceramic that are fixed to each of the upper and lower of the cylindrical wall, and
said solid electrolyte secondary battery further has a flexible sheet covering in airtight the outer peripheral surface of said positive storage container.

11. According to the solid electrolyte secondary battery of claim 10, wherein said ceramic to form said lid and bottom lid is α-alumina, said positive storage container has an anode rod extending in the axial direction in said positive electrode chamber and its one end is fixed to said lid or said bottom lid.

12. According to the solid electrolyte secondary battery of claim 11, wherein said anode rod has a plate-shaped spacing piece extending radially in the radial direction to form a plurality of sections in said positive electrode chamber.

13. According to the solid electrolyte secondary battery of claim 10, wherein said flexible sheet is metal foil.

14. According to the solid electrolyte secondary battery of claim 10, wherein said negative electrode member is formed of flexible sheet, further, wherein the porous spacer that put pressure acting the outer surface of said negative electrode member on the outer peripheral surface of said cylindrical wall is provided in said negative electrode chamber.

15. According to the solid electrolyte secondary battery of claim 14, wherein said porous spacer are metal fiber mat, metal foam or porous ceramic.

16. According to the solid electrolyte secondary battery of claim 1, wherein said negative electrode active material is sodium, and said positive electrode material is sulfur.
